# EUROPÄISCHE PATENTSCHRIFT

(11) **EP 1 988 023 B1**
(45) Veröffentlichungstag und Bekanntmachung des Hinweises auf die Patenterteilung: **21.04.2010**
(21) Anmeldenummer: 08006000.7
(22) Anmeldetag: 28.07.2005
(51) Int. Cl.: B65B 55/02, B65B 55/06, A23C 3/027, A23L 2/46, B65B 3/04

(54) **Vorrichtung und Verfahren zum Abfüllen**
Apparatus and method for filling
Dispositif et procédé de remplissage

(43) Veröffentlichungstag der Anmeldung: 05.11.2008
(62) Teilanmeldung aus: 05016444.1
(73) Patentinhaber: Krones AG, 93073 Neutraubling (DE)
(72) Erfinder: Wild, Hans-Peter, Dr., 69214 Eppelheim (DE); Kraft, Eberhard, 74924 Neckarbischofsheim (DE)
(74) Vertreter: Grünecker, Kinkeldey, Stockmair & Schwanhäusser Anwaltssozietät

(56) Entgegenhaltungen:
- EP-A- 0 337 010
- EP-A- 0 661 208
- GB-A- 993 003
- US-A1- 2004 131 735
- PATENT ABSTRACTS OF JAPAN Bd. 2002, Nr. 04, 4. August 2002 (2002-08-04) -& JP 2001 354213 A (DAINIPPON PRINTING CO LTD), 25. Dezember 2001 (2001-12-25)

## Beschreibung

Die Erfindung betrifft eine Vorrichtung und ein Verfahren zum Abfüllen von heißem Füllgut.

In der Getränkeindustrie ist es bekannt, verderbliche Getränke heiß abzufüllen, damit die Getränke beim Abfüllen eine möglichst niedrige Keimbelastung aufweisen. Weiter sind Verpackungen bekannt, die mit einem Verpackungsverschluss, wie etwa einer Verschlusskappe, nach dem Befüllen verschlossen werden können. Dadurch wird das Getränk in der Verpackung, hermetisch verschlossen verpackt, so dass eine möglichst lange Haltbarkeitsdauer erreicht werden kann.

Als Getränkeverpackungen sind beispielsweise Folienbeutel bekannt, die sich durch ihr geringes Eigengewicht auszeichnen.

Aufgabe der vorliegenden Erfindung ist es, die Keimfreiheit des Verpackungsinneren in einem möglichst hohen Maße zu gewährleisten, um so noch längere Mindesthaltbarkeitsdauer zu erzielen.

Aus der US 20040131735 ist eine Vorrichtung nach dem Oberbegriff des Anspruchs 1 sowie ein Verfahren nach dem Oberbegriff des Anspruchs 11 bekannt.

Diese Aufgabe wird mit einer Vorrichtung nach Anspruch 1 und einem Verfahren nach Anspruch 1 gelöst. Vorteilhafte Ausführungsformen sind in den Unteransprüchen offenbart.

Die Erfindung betrifft eine Vorrichtung zum Abfüllen mit einer Abfülleinrichtung zum Befüllen von Verpackungen mit heißem Füllgut, einer Verschließeinrichtung zum Verschließen der Verpackung, wobei die Verpackung einen Verpackungsverschluss zum Öffnen der Verpackung aufweist und einer Schwenkeinrichtung zum Verschwenken der Verpackung, so dass der Verpackungsverschluss mit heißem Füllgut in Kontakt kommt.

Die Erfindung betrifft auch ein Verfahren zum Abfüllen, bei dem heißes Füllgut in eine Verpackung abgefüllt wird, die Verpackung geschlossen wir, wobei die Verpackung einen Verpackungsverschluss aufweist und die Verpackung verschwenkt wird, so dass der Verpackungsverschluss mit dem heißen Füllgut in Kontakt kommt.

Bei der Vorrichtung ist eine Schwenkeinrichtung vorgesehen, mit der die Verpackung so verschwenkt werden kann, dass die Innenseite des Verpackungsverschlusses mit dem heißen Füllgut in Kontakt kommt. Dadurch, dass das Füllgut nach dem Abfüllen noch heiß ist, kann es bei dem Verpackungsverschluss, der durch das Verschwenken mit dem Füllgut in der Verpackung in Kontakt kommen kann, eine keimtötende Wirkung entfalten.

Erfindungsgemäß umfasst die Schwenkeinrichtung eine Haltegabel. Dies erlaubt beispielsweise bei Folienbeuteln, dass die Verpackung etwas zwischen den Haltegabeln hervorsteht und so von einem darunter angeordneten Förderband erfasst werden kann, um die Verpackung so von der Haltegabel abzuziehen.

Zum Befüllen der Verpackung sind verschiedene Möglichkeiten gegeben. Zum einen kann durch einen bereits in die Verpackung eingesetzten (z. B. eingeschweißten)

Ausguss das Füllgut eingebracht werden. Auch kann das Füllgut durch eine Öffnung der Verpackung eingefüllt werden und diese Öffnung anschließend mit dem Ausguss verschlossen werden. Dabei kann eine Verschlusskappe bereits auf dem Ausguss aufgesetzt sein oder auch erst später aufgesetzt werden. Auch ist es möglich die Verpackung durch eine Öffnung hindurch zu befüllen, die neben dem Verpackungsverschluss oder neben der Position eines noch einzusetzenden Verpackungsverschlusses liegt. Die Abfülleinrichtungen können je nach Vorgehensweise entsprechend ausgebildet sein.

Auch zum Verschließen gibt es verschiedene Möglichkeiten. Es kann eine Verschlusskappe auf einen Ausguss aufgesetzt werden. Es kann ein (offener oder verschlossener) Ausguss in die Verpackung eingesetzt werden, um so die Öffnung für den Ausguss zu verschließen. Auch kann eine Öffnung in der Verpackung an einer anderen Stelle, als die des Ausgusses verschlossen werden. Die Verschließeinrichtung ist jeweils entsprechend ausgebildet.

Für eine gute Keimabtötung ist es von Vorteil, wenn das Füllgut eine gewisse Zeit lang mit dem Verpackungsverschluss in Kontakt bleibt. Daher ist es vorteilhaft, wenn eine Einrichtung wie etwa eine Förderfläche vorgesehen ist, mit der die Verpackungen in der verschwenkten Position beibehalten werden können, z. B. indem sie gefördert werden.

Um einen guten Kontakt zwischen Füllgut und Verpackungsverschluss zu erreichen ist eine Verschwenkung um mehr als 30°, 45°, 60°, 75°, 90°, 100°, 120°, 140°, 150°, 180°, 270° oder 360° vorteilhaft, da dann Luft oder sonstiges Gas, dass sich bei dem Verpackungsverschluss befindet, verdrängt wird.

Eine Ausführungsform der Vorrichtung und des Verfahrens soll anhand der beiliegenden Figuren erläutert werden. Dabei zeigt:
- Figur 1: Eine dreidimensionale schematische Darstellung einer Vorrichtung;
- Figur 2: eine zweidimensionale schematische Schnittzeichnung;
- Figur 3: eine dreidimensionale schematische Darstellung eines Folienbeutels in der Vorrichtung.

Im Folgenden sollen hier beispielhaft Folienbeutel, wie etwa Standbodenbeutel, exemplarisch für Verpackungen besprochen werden.

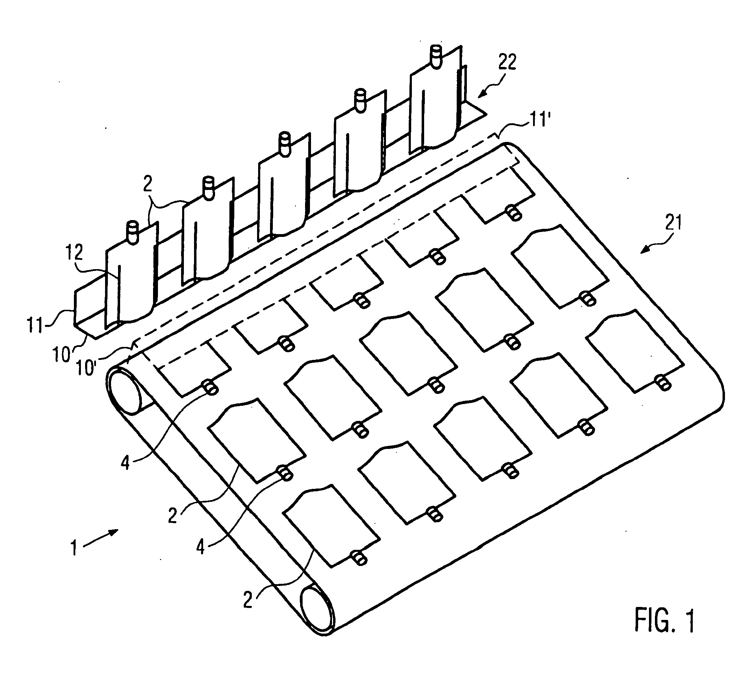

In Figur 1 ist eine Schwenkeinrichtung 22 zum Verschwenken von Folienbeuteln 2 dargestellt. Nicht dargestellt ist eine Abfüllanlage, die bei der Vorrichtung in Fig. 1 beispielsweise links der Schwenkvorrichtung 22 angeordnet sein kann und von der die Folienbeutel 2 auf die Verschwenkeinrichtung 22 übergeben werden können.

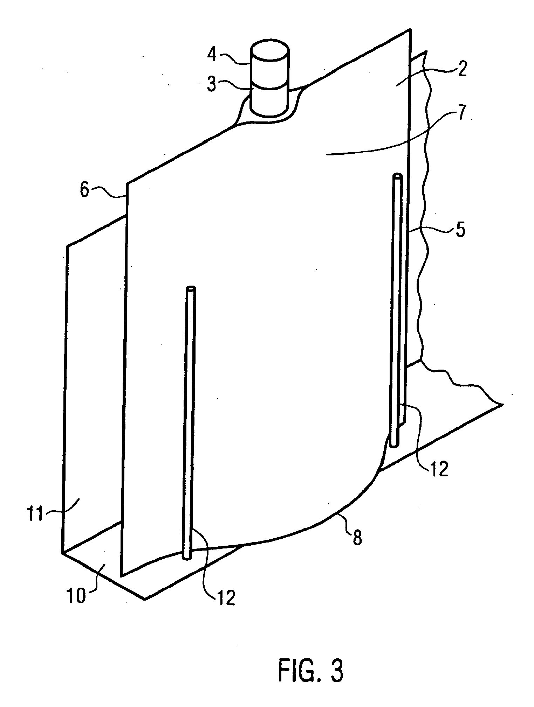

Die Folienbeutel 2 weisen an ihrem oberen Ende einen Ausguss 3, auch Tülle oder Spout genannt, auf, der mit einer Verschlusskappe 4 verschlossen ist (siehe Figur 3). Nach Befüllen der Folienbeutel 2 mit dem Füllgut werden die Verschlusskappen 4 aufgesetzt, um die Folienbeutel 2 zu verschließen. Die Folienbeutel 2 befinden sich dabei auf einer Verschwenkeinrichtung 22 oder werden auf diese anschließend aufgebracht.

Auch ist es möglich, dass der Ausguss 3 mit bereits aufgesetzter oder später aufzusetzender Verschlusskappe 4 in den Folienbeutel 2 eingeschweißt wird, nachdem der Folienbeutel 2 befüllt wurde. Durch das Einschweißen des Ausgusses 3 wird die für den Ausguss 3 vorgesehene Öffnung des Folienbeutels 2 verschlossen. Falls beispielsweise die gesamte obere Kante des Folienbeutels 2 offen ist, kann durch diese Öffnung das Füllgut in den Folienbeutel 2 eingebracht werden. Anschließend wird ein Ausguss 3 an die entsprechende Position (s. Fig. 3) gebracht und das obere Ende des Folienbeutels 2 verschweißt, wobei der Ausguss 3 dann eingeschweißt wird.

Eine weitere Möglichkeit besteht darin, den Folienbeutel 2 unabhängig von dem Ausguss 3 und der Verschlusskappe 4 zu füllen. Dazu kann an der Oberkante oder auch an einer anderen Stelle ein Öffnung vorhanden sein, die nach dem Befüllen durch Verschweißen verschlossen wird. Dies kann sowohl mit als auch ohne eingeschweißten Ausguss 3 geschehen.

Jegliche Art des Verschließens kann geschehen bevor die Folienbeutel 2 auf die Verschwenkeinrichtung aufgesetzt werden oder auch erst wenn sie bereits darauf abgestellt sind. Demgemäß befindet sich die Verschließeinrichtung dann bei der Verschwenkeinrichtung bzw. die Verschwenkeinrichtung bildet einen Teil der Verschließeinrichtung.

Die Verschwenkeinrichtung 22 weist ein Bodenteil 10 auf, auf dem die Folienbeutel 2 stehen können. Weiterhin hat die Verschwenkeinrichtung 22 ein Rückenteil 11, dass die Folienbeutel 2 stützt. Auf der dem Rückenteil 11 gegenüberliegenden Seite sind Haltegabeln 12 vorgesehen.

Die Schwenkeinrichtung 22 kann in Figur 1 nach rechts unten verschwenkt werden. Die Endposition ist in Figur 1 gestrichelt dargestellt. Die Folienbeutel 2 befinden sich in dieser verschwenkten Position über einem Förderband 21. Auf dem Förderband 21 können die Folienbeutel 2 herabgefördert werden. Durch das Verschwenken tritt das heiße Füllgut in Kontakt mit dem Inneren der Verschlusskappe 4, die sich dann am unteren Ende des Folienbeutels 2 befindet. Durch den Transport auf dem Förderband 21 verbleibt der Beutel eine gewisse Zeit lang in dieser Position, sodass das heiße Füllgut genügend Zeit hat, auf das Innere der Verschlusskappe 4 durch die Temperatureinwirkung eine keimtötende Wirkung auszuüben.

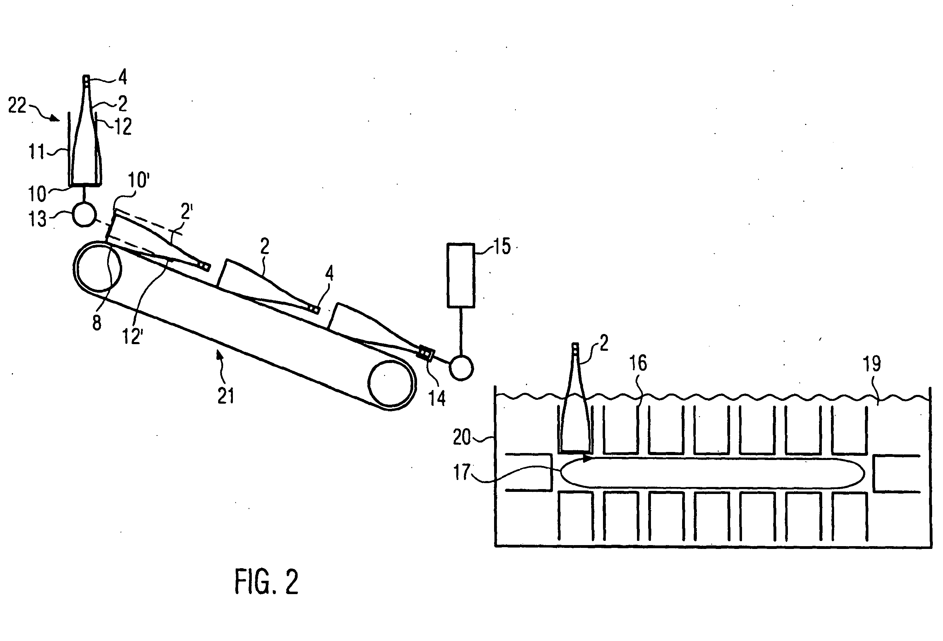

In Figur 2 ist dargestellt, wie die Verschwenkeinrichtung 22 um eine Schwenkachse 13 geschwenkt werden kann. Auch eine Schwenkung nicht um eine feste Achse, sondem mit einem Gelenkgestell oder Ähnliches ist möglich.

In Figur 2 ist zu erkennen, wie in der verschwenkten Position (siehe gestrichelte Darstellung in Figur 2) ein Folienbeutel 2' mit dem Förderband 21 an einer Stelle 8 in

Kontakt kommt. An der Stelle 8 steht der Folienbeutel 2' zwischen den Zinken der Haltegabel 12 hervor (siehe auch Figur 3). Durch diesen Kontakt kann das Förderband 21 den Folienbeutel 2' aus der Haltegabel 12' herausziehen. Dadurch wird der Abtransport der Folienbeutel 2' von der Schwenkeinrichtung 22 gewährleistet.

Am unteren Ende des Förderbandes 21 ist eine Transfereinrichtung 15 mit einer Klammer 14 dargestellt. Mit dieser Transfereinrichtung 15 können die Folienbeutel 2 in ein Kühlbad 20 überführt werden. In dem Kühlbad 20 befindet sich eine Kühlflüssigkeit 19, wie etwa Wasser. In der Kühlflüssigkeit 19 läuft ein Förderer 17 um, der Aufnahmen 16 aufweist, in die die Folienbeutel 2 eingesetzt werden können. Durch den Transport durch das Kühlbad 20 werden die Folienbeutel 2 und damit das Getränk im Inneren soweit abgekühlt, dass die Folienbeutel 2 verpackt werden können.

In Figur 3 ist ein Folienbeutel 2 dargestellt, der an seinem oberen Ende einen eingeschweißten Ausguss 3 aufweist. Der Ausguss 3 ist mit einer Verschlusskappe 4 verschlossen. Der Folienbeutel 2 weist seitliche Ränder 5 und 6 auf, an denen Schweißnähte vorliegen. Hier sind die Seitenfolien (von denen die Seitenfolie 7 sichtbar ist) miteinander verschweißt.

Wie in Figur 3 zu erkennen, steht der Folienbeutel 2 an seinem unteren Ende im Bereich 8 über die Grundplatte 10 hervor.

Bei dem erfindungsgemäßen Verfahren werden Folienbeutel 2 befüllt und anschließend mit einer Verschlusskappe 4, durch Einschweißen eines Ausgusses 3 oder durch Verschweißen einer separaten Füllöffnung verschlossen. Danach werden die Folienbeutel 2 auf eine Verschwenkeinrichtung 22 transferiert. Hier stehen die Folienbeutel 2 auf einem Bodenteil 10 und werden von einem Rückenteil 11 gestützt. Auf der Vorderseite der Verschwenkeinrichtung 22 sind Haltegabeln 12 vorgesehen, wobei der Folienbeutel 2 mit der Stelle 8 zwischen den Haltegabeln 12 hervorsteht. Durch Verschwenken der Verschwenkeinrichtung 22 um beispielsweise 100° bis 150° befindet sich die Verschlusskappe 4 am unteren Ende des Folienbeutels. Die Innenseite der Verschlusskappe 4 kommt daher mit dem heißen Füllgut in dem Folienbeutel 2 in Kontakt. Dadurch werden eventuelle Keime auf der Innenseite der Verschlusskappe 4 zumindest teilweise reduziert, da das Füllgut noch genügend heiß ist.

Der Winkel, um den verschwenkt wird, kann auch größer oder kleiner sein, solange die Innenseite der Verschlusskappe 4 mit dem noch heißen Füllgut in Kontakt kommt. Bei entsprechender Befüllung des Folienbeutels kann auch ein Winkel von mindestens 30°, 45°, 60°, 75° oder 90° geeignet sein. Große Verschwenkwinkel auch um bis zu 180° oder 270° oder 360° führen dazu, dass Keime auf der Innenseite der Verschlusskappe 4 abgetötet werden. Die obere Grenze für den Schwenkwinkel kann bei 45°, 60°, 75°, 90°, 100°, 120°, 140°, 160°, 180°, 270° oder 360° liegen.

Durch das Verschwenken wird auch eine keimtötende Wirkung auf die Innenseite des Ausgusses 3 ausgeübt.

Das Förderband 21 kann durch den Kontakt an der Stelle 8 den Folienbeutel 2 aus der Haltegabel 12 herausziehen. Der Förderer 21 transportiert den Folienbeutel 2 dann in dieser verschwenkten Position abwärts. Während dieser Zeit wird die Keimabtötungswirkung aufrechterhalten. Mit einer Klammer 14 einer Transferrichtung 15 wird ein Folienbeutel 2 dann in ein Kühlbad 20 transferiert. In dem Kühlbad 20 sind Aufnahmen 16 vorgesehen, die an einem Förderer 17 umlaufen, um so die Folienbeutel 2 in einer Kühlflüssigkeit abzukühlen.

Die gesamte Vorrichtung arbeitet taktweise, d. h., dass in einem Takt die Verschwenkeinrichtung 22 aus der oberen Position in die Verschwenkposition und wieder zurückbewegt wird. Auch der Förderer 21, die Transfereinrichtung 15 und vorzugsweise auch der Förderer 17 des Kühlbads 20 arbeiten entsprechend taktweise.

Die Vorrichtung weist mehrere Spuren auf, in denen mehrere Folienbeutel 2 nebeneinander gleichzeitig behandelt werden können. Dadurch können höhere Durchsatzraten erzielt werden.

## Patentansprüche

1. Vorrichtung zum Abfüllen mit:
einer Abfülleinrichtung zum Befüllen von Verpackungen (2) mit heißem Füllgut,
einer Verschließeinrichtung zum Verschließen der Verpackung (2), wobei die Verpackung (2) einen Verpackungsverschluss (3, 4) zum Öffnen der Verpackung (2) aufweist und
einer Schwenkeinrichtung (22) zum Verschwenken der Verpackung (2), so dass der Verpackungsverschluss (3, 4) mit heißem Füllgut in Kontakt kommt,
**dadurch gekennzeichnet, dass**
die Schwenkeinrichtung (22) eine Haltegabel (12) umfasst, die in der verschwenkten Position unterhalb der Verpackung (2) ist.

2. Vorrichtung nach Anspruch 1, **dadurch gekennzeichnet, dass** die Verschließeinrichtung zum Verschließen eine Verschlusskappe (4) auf die Verpackung (2) aufsetzten kann.

3. Vorrichtung nach Anspruch 1 oder 2, **dadurch gekennzeichnet, dass** die Verschließeinrichtung eine neben dem Verpackungsverschluss (3, 4) liegende Öffnung verschließt, beispielsweise durch Verschweißen von Folienmaterial der Verpackung (2).

4. Vorrichtung nach einem der Ansprüche 1 bis 3, **dadurch gekennzeichnet, dass** die Verschließeinrichtung einen Verpackungsverschluss (3, 4) oder einen Teil (3) davon in eine Öffnung der Verpackung (2) einsetzt, beispielsweise durch Verschweißen.

5. Vorrichtung nach einem der Ansprüche 1 bis 4, **dadurch gekennzeichnet, dass** die Abfülleinrichtung zum Befüllen der Verpackung (2) durch einen Teil des Verpackungsverschlusses (3) hindurch ausgebildet ist.

6. Vorrichtung nach einem der Ansprüche 1 bis 4, **dadurch gekennzeichnet, dass** die Abfülleinrichtung zum Befüllen der Verpackung (2) durch eine neben dem Verpackungsverschluss (3, 4) oder an der vorgesehenen Position des Verpackungsverschlusses (3, 4) liegende Öffnung ausgebildet ist.

7. Vorrichtung nach einem der Ansprüche 1 bis 6, **dadurch gekennzeichnet, dass** eine Einrichtung (21) wie etwa eine Förderfläche (21) vorgesehen ist, mit der die Verpackungen (2) in der verschwenkten Position beibehalten werden können, beispielsweise indem sie gefördert werden.

8. Vorrichtung nach Anspruch 7, **dadurch gekennzeichnet, dass** die Einrichtung (21) ein Förderband umfasst.

9. Vorrichtung nach einem der Ansprüche 1 bis 8, **dadurch gekennzeichnet, dass** die Schwenkeinrichtung (22) die Verpackung (2) um mindestens 30°, 45°, 60°, 75°, 90°, 100°, 120°, 140°, 150°, 180°, 270° oder 360° verschwenken kann.

10. Verfahren zum Abfüllen, bei dem:
heißes Füllgut in eine Verpackung (2) abgefüllt wird,
die Verpackung (2) verschlossen wird,
wobei die Verpackung (2) einen Verpackungsverschluss (3, 4) aufweist und
die Verpackung (4) verschwenkt wird, so dass der Verpackungsverschluss (3, 4) mit dem heißem Füllgut in Kontakt kommt,
**dadurch gekennzeichnet, dass** die Verpackung (2) so verschwenkt wird, dass sie auf einer Haltegabel (12) aufliegt.

11. Verfahren nach Anspruch 10, **dadurch gekennzeichnet, dass** zum Verschließen eine Verschlusskappe (4) auf die Verpackung (2) aufgesetzt wird.

12. Verfahren nach einem der Ansprüche 10 oder 11 **dadurch gekennzeichnet, dass** zum Verschließen eine neben dem Verpackungsverschluss (3, 4) liegende Öffnung verschlossen wird.

13. Verfahren nach einem der Ansprüche 10 bis 12, **dadurch gekennzeichnet, dass** zum Verschließen ein Verpackungsverschluss (3, 4) oder ein Teil (3) davon in eine Öffnung der Verpackung eingesetzt wird, beispielsweise durch Verschweißen.

14. Verfahren nach einem der Ansprüche 10 bis 13, **dadurch gekennzeichnet, dass** das Füllgut durch einen Teil (3) des Verpackungsverschlusses hindurch abgefüllt wird.

15. Verfahren nach einem der Ansprüche 10 bis 13, **dadurch gekennzeichnet, dass** das Füllgut durch eine neben dem Verpackungsverschluss (3, 4) liegende oder an der vorgesehenen Stelle des Verpackungsverschlusses (3, 4) liegende Öffnung hindurch abgefüllt wird.

16. Verfahren nach einem der Ansprüche 10 bis 15, **dadurch gekennzeichnet, dass** die Verpackung (2) nach dem Verschwenken in dieser Orientierung eine Zeit lang beibehalten wird und dabei beispielsweise gefördert wird.

17. Verfahren nach einem der Ansprüche 10 bis 16, **dadurch gekennzeichnet, dass** die Verpackung (2) um mindestens 30°, 45°, 60°, 75°, 90°, 100°, 120°, 140°, 150°, 180°, 270° oder 360° verschwenkt wird.

18. Verfahren nach Anspruch 10, **dadurch gekennzeichnet, dass** sich nach dem Verschwenken ein Teil der Verpackung (2) unterhalb der Haltegabel (12) befindet, der mit einem abtransportierenden Förderband (21) in Kontakt kommt.

## Claims

1. Filling apparatus with:
a filling device for filling packages (2) with hot product,
a closure device for closing the package (2), the package (2) having a stopper (3, 4) for the opening of the package (2), and
a tilting device (22) for tilting the package (2) so that the package stopper (3, 4) comes in contact with hot product,
**characterized in that**
the tilting device (22) comprises a cradle (12) which is underneath the package (2) in the tilted position.

2. Apparatus according to Claim 1, **characterized in that** the closure device is capable of mounting a closure cap (4) on the package (2).

3. Apparatus according to Claim 1 or Claim 2, **characterized in that** the closure device seals an opening located near the package stopper (3, 4), for example by welding foil material of the package (2).

4. Apparatus according to any one of Claims 1 to 3, **characterized in that** the closure device inserts a package stopper (3, 4) or a part (3) thereof into an opening of the package (2), for example by welding.

5. Apparatus according to any one of Claims 1 to 4, **characterized in that** the filling device is configured to fill the package (2) through a part of the package stopper (3).

6. Apparatus according to any one of Claims 1 to 4, **characterized in that** the filling device is configured to fill the package (2) through an opening located near the package stopper (3, 4) or at the intended position of the package stopper (3, 4).

7. Apparatus according to any one of Claims 1 to 6, **characterized in that** a device (21) such as a conveyor surface (21) or the like is provided whereby the packages (2) can be kept in the tilted position, for example while being conveyed.

8. Apparatus according to Claim 7, **characterized in that** the device (21) comprises a conveyor belt.

9. Apparatus according to any one of Claims 1 to 8, **characterized in that** the tilting device (22) is capable of tilting the package (2) through at least 30°, 45°, 60°, 75°, 90°, 100°, 120°, 140°, 150°, 180°, 270° or 360°.

10. Filling method wherein:
hot product is filled into a package (2),
the package (2) is closed,
the package (2) having a stopper (3, 4), and
the package (2) is tilted so that the package stopper (3, 4) comes in contact with the hot product,
**characterized in that** the package (2) is tilted so that it rests on a cradle (12).

11. Method according to Claim 10, **characterized in that** closure is effected by mounting a closure cap (4) on the package (2).

12. Method according to either of Claims 10 and 11, **characterized in that** closure is effected by sealing an opening located near the package stopper (3, 4).

13. Method according to any one of Claims 10 to 12, **characterized in that** closure is effected by inserting a package stopper (3, 4) or a part (3) thereof into an opening of the package, for example by welding.

14. Method according to any one of Claims 10 to 13, **characterized in that** the package is filled with product through a part (3) of the package stopper.

15. Method according to any one of Claims 10 to 13, **characterized in that** the package is filled with product through an opening located near the package stopper (3, 4) or at the intended location of the package stopper (3, 4).

16. Method according to any one of Claims 10 to 15, **characterized in that** after tilting, the package (2) is kept **in that** orientation for a time, for example while being conveyed.

17. Method according to any one of Claims 10 to 16, **characterized in that** the package (2) is tilted through at least 30°, 45°, 60°, 75°, 90°, 100°, 120°, 140°, 150°, 180°, 270° or 360°.

18. Method according to Claim 10, **characterized in that** after tilting, a part of the package (2) is located below the cradle (12), and comes in contact with a discharge conveyor belt (21).

## Revendications

1. Installation de soutirage, comportant :
un dispositif de soutirage destiné à remplir des emballages (2) avec un produit de remplissage chaud, un dispositif de fermeture destiné à obturer l'emballage (2), ledit emballage (2) comportant une fermeture d'emballage (3, 4) destinée à l'ouverture de l'emballage (2), et
un dispositif de pivotement (22) pour faire pivoter l'emballage (2), de telle sorte que la fermeture d'emballage (3, 4) entre en contact avec le produit de remplissage chaud,
**caractérisée en ce que**
le dispositif de pivotement (22) comporte une fourche de retenue (12), qui se situe en dessous de l'emballage (2) dans la position pivotée.

2. Installation selon la revendication 1, **caractérisée en ce que** le dispositif de fermeture peut poser un capuchon (4) sur l'emballage (2) pour fermer ce dernier.

3. Installation selon la revendication 1 ou 2, **caractérisée en ce que** le dispositif de fermeture obture un orifice situé à côté de la fermeture d'emballage (3, 4), par exemple par soudage du matériau en forme de feuille de l'emballage (2).

4. Installation selon l'une quelconque des revendications 1 à 3, **caractérisée en ce que** le dispositif de fermeture insère, par exemple par soudage, une fermeture d'emballage (3, 4) ou une partie (3) de celle-ci dans un orifice de l'emballage (2).

5. Installation selon l'une quelconque des revendications 1 à 4, **caractérisée en ce que** le dispositif de soutirage est réalisé pour remplir l'emballage (2) à travers une partie de la fermeture d'emballage(3).

6. Installation selon l'une quelconque des revendications 1 à 4, **caractérisée en ce que** le dispositif de soutirage est réalisé pour remplir l'emballage (2) à travers un orifice situé à côté de la fermeture d'emballage (3, 4) ou à l'emplacement prévu sur la fermeture d'emballage (3, 4).

7. Installation selon l'une quelconque des revendications 1 à 6, **caractérisée en ce qu'**il est prévu un dispositif (21), tel qu'une surface de transport (21), avec laquelle les emballages (2) peuvent être maintenus dans la position pivotée, par exemple par le fait qu'ils sont transportés.

8. Installation selon la revendication 7, **caractérisée en ce que** le dispositif (21) comporte une bande transporteuse.

9. Installation selon l'une quelconque des revendications 1 à 8, **caractérisée en ce que** le dispositif de pivotement (22) peut faire pivoter l'emballage (2) sur au moins 30°, 45°, 60°, 75°, 90°, 100°, 120°, 140°, 150°, 180°, 270° ou 360°.

10. Procédé de soutirage, dans lequel :
un produit de remplissage chaud est soutiré dans un emballage (2),
l'emballage (2) est fermé ensuite,
sachant que l'emballage (2) comporte une fermeture d'emballage (3, 4) et que l'emballage (2) est amené en pivotement de telle sorte que la fermeture d'emballage (3, 4) entre en contact avec le produit de remplissage chaud,
**caractérisé en ce que** l'emballage (2) est mis en pivotement de manière à venir en appui sur une fourche de retenue (12).

11. Procédé selon la revendication 10, **caractérisé en ce qu'**un capuchon (4) est posé sur l'emballage (2) pour fermer celui-ci.

12. Procédé selon la revendication 10 ou 11, **caractérisé en ce que**, pour la fermeture de l'emballage, un orifice, situé à côté de la fermeture d'emballage (3, 4), est obturé.

13. Procédé selon l'une quelconque des revendications 10 à 12, **caractérisé en ce que** pour la fermeture de l'emballage, une fermeture d'emballage (3, 4) ou une partie (3) de celle-ci est insérée, par soudage par exemple, dans un orifice de l'emballage.

14. Procédé selon l'une quelconque des revendications 10 à 13, **caractérisé en ce que** le produit de remplissage est soutiré à travers une partie (3) de la fermeture de l'emballage.

15. Procédé selon l'une quelconque des revendications 10 à 13, **caractérisé en ce que** le produit de remplissage est soutiré à travers un orifice situé à côté de la fermeture d'emballage (3, 4) ou à l'emplacement prévu sur la fermeture d'emballage (3, 4).

16. Procédé selon l'une quelconque des revendications 10 à 15, **caractérisé en ce que** l'emballage (2), après le pivotement, est maintenu pendant un certain temps dans cette orientation et, en outre, est transporté par exemple.

17. Procédé selon l'une quelconque des revendications 10 à 16, **caractérisé en ce que** l'emballage (2) pivote sur au moins 30°, 45°, 60°, 75°, 90°, 100°, 120°, 140°, 150°, 180°, 270° ou 360°.

18. Procédé selon la revendication 10, **caractérisé en ce que**, après le pivotement, une partie de l'emballage (2) est située en dessous de la fourche de retenue (12), laquelle partie vient en contact avec une bande transporteuse d'évacuation (21).
